Europäisches Patentamt

European Patent Office

Office européen des brevets

(11) Numéro de publication : **0 453 346 A1**

# (12) DEMANDE DE BREVET EUROPEEN

(21) Numéro de dépôt : **91400914.7**

(22) Date de dépôt : **04.04.91**

(51) Int. Cl.⁵ : **H02B 1/24**

(30) Priorité : **18.04.90 FR 9004922**

(43) Date de publication de la demande :
**23.10.91 Bulletin 91/43**

(84) Etats contractants désignés :
**DE GB IT**

(71) Demandeur : **AUTOMOBILES PEUGEOT**
**75, avenue de la Grande Armée**
**F-75116 Paris (FR)**
Demandeur : **AUTOMOBILES CITROEN**
**62 Boulevard Victor-Hugo**
**F-92200 Neuilly-sur-Seine (FR)**

(72) Inventeur : **Finet, Pierre**
**32, Rue Pasteur**
**F-78190 Trappes (FR)**

(74) Mandataire : **Robert, Jean-François**
**Centre Technique Citroen Propriété**
**Industrielle Route de Gisy**
**F-78140 Velizy (FR)**

(54) **Tête de filerie pour machines et installations industrielles et platines utilisables dans cette tête de filerie.**

(57)     Tête de filerie pour la commande de machines et installations industrielles.
     La tête de filerie selon l'invention est réalisée de façon modulaire à l'aide de platines standard composées chacune d'un ensemble de composants électromécaniques élémentaires. Ces platines peuvent être regroupées en ensembles logés dans des armoires. Par exemple, une armoire de module (AM) servant à la commande d'un module composé d'un ensemble de machines comprend une platine de réception (R) recevant des ordres et une platine de module (M) les transmettant à une autre platine de réception (R) située dans une armoire d'application (AA) commandant une machine de ce module par l'intermédiaire d'une platine d'application (AP).
     L'invention s'applique à la commande de machines telles que des presses ou des machines transfert.

EP 0 453 346 A1

FIG. 2

L'invention a pour objet une tête de filerie pour machines et installations industrielles.

On rappelle qu'une tête de filerie est un élément qui assure la question de la mise sous tension et hors tension des circuits électriques d'une armoire de commande. A l'heure actuelle, les différentes fonctions d'une tête de filerie sont réalisées par le câblage de composants électromécaniques élémentaires tels que relais, contacteurs, minuteries, etc... La réalisation de ces câblages se fait au coup par coup en fonction de chaque application, ce qui est une opération longue et coûteuse.

L'invention a pour but d'éliminer ces inconvénients en proposant une tête de filerie beaucoup plus simple et rapide à installer.

Selon la principale caractéristique de la tête de filerie objet de l'invention, celle-ci est réalisée de façon modulaire à l'aide de platines standards composées chacune d'un ensemble de composants électromécaniques élémentaires.

Ces platines peuvent être avantageusement regroupées en des ensembles servant à la commande soit d'un ensemble de machines ou module, soit d'une machine ou application, soit d'un sous-ensemble d'une application.

Dans la présente description, on appellera "module" une machine, installation, ou ensemble de machines correspondant au champ minimal d'un arrêt d'urgence. Dans le cas d'une ligne de presses par exemple, il est nécessaire d'arrêter l'ensemble de la ligne en cas de danger en appuyant sur un seul bouton. Il y a généralement plusieurs boutons d'arrêt d'urgence répartis le long de la ligne car on ne peut se permettre de perdre du temps en recherchant quelle presse de la ligne est en cause.

On appellera "application" une machine unitaire telle qu'un robot, un manipulateur, etc... Enfin, un sous-ensemble d'une application correspond à une même structure mécanique, par exemple un poste d'une machine transfert, la machine elle-même étant une application.

Il est bien entendu que, suivant les cas et en fonction de l'organisation de l'atelier, une machine complexe pourra éventuellement être considérée comme un module ou une partie de cette machine comme une application, etc...

L'invention a également pour objet des platines utilisables dans une tête de filerie telle que mentionnée ci-dessus. Ces platines peuvent être notamment :

    – une platine dite de module remplissant l'une au moins des fonctions suivantes :

       . commande de l'arrêt d'urgence d'un module donné ;

       . mise sous tension d'arrêts d'urgence extérieurs à ce module ;

       . envoi de télécommandes d'ordre vers au moins une platine réceptrice appartenant à un ensemble servant à la commande d'une application de ce module ;

    – une platine dite d'application remplissant l'une au moins des fonctions suivantes : mise sous tension et hors tension d'une application, mise en service, départ et reprise de cycle d'une application, arrêt de fin de journée, réception et traitement d'un arrêt d'urgence en provenance d'une platine de module et envoi de télécommandes d'ordre vers un ensemble servant à la commande d'un sous-ensemble d'une application ou vers une autre platine d'application ;

    – une platine dite d'avertissement ayant pour fonction de décaler dans le temps un ordre reçu, ce décalage étant utilisé pour déclencher un signal d'avertissement ;

    – une platine dite de réception ayant pour fonction de recevoir les ordres émis par un dispositif de télécommande, et de les transmettre à des organes qu'elle commande, soit directement, soit par l'intermédiaire d'une platine de module ou d'une platine d'application :

    – une platine dite de zone protégée remplissant l'une au moins des fonctions suivantes ;

       . mise en sécurité d'organes se trouvant dans une zone dangereuse, par exemple par action sur un protecteur d'accès à cette zone ; et

       . réarmement à la fermeture du protecteur ;

    – une platine dite d'adjonction servant à doubler les fonctions de sécurité d'une platine de module ou d'une platine de zone protégée.

Eventuellement, une platine peut être munie de bornes aptes à recevoir des cavaliers permettant soit d'éliminer une fonction, soit de réaliser plusieurs fonctions simultanément.

Selon d'autres caractéristiques de la tête de filerie objet de l'invention :

    – l'ensemble servant à la commande d'un module comprend une platine de module et éventuellement une platine de réception ;

    – l'ensemble servant à la commande d'une application comprend au moins une platine de réception et une platine d'application ;

    – l'ensemble servant à la commande d'un sous-ensemble d'une application comprend au moins une platine de réception ;

    – l'ensemble servant à la commande d'un module est raccordé à un réseau d'alimentation électrique et éventuellement à un réseau de télécommande, l'ensemble servant à la commande d'une application est relié d'une part au réseau d'alimentation électrique par un câble d'alimentation et d'autre part à un ensemble servant à la commande d'un module par un câble de liaison, et l'ensemble servant à la commande d'un sous-ensemble d'une application est relié à l'ensemble servant à la commande de cette application d'une part par un câble d'alimentation électrique et d'autre part par un câble de liaison.

Les platines constituant ces différents ensembles peuvent être regroupées dans des armoires de commande appelées respectivement "armoire de module", "armoire d'application" et "armoire secondaire" dans la présente description.

L'invention apparaîtra mieux à la lecture de la description qui va suivre, donnée uniquement à titre d'exemple, en référence aux dessins annexés, dans lesquels :

    – la figure 1 est une vue schématique des armoires de commande constituant une tête de filerie selon l'invention et de leurs liaisons ;

    – la figure 2 est une vue plus détaillée montrant les liaisons entre les platines disposées dans les différentes armoires de commande d'une tête de filerie selon l'invention :

    – la figure 3 est une vue schématique d'un ensemble de commande d'un module ; et

    – la figure 4 est une vue schématique d'un ensemble de commande d'une application.

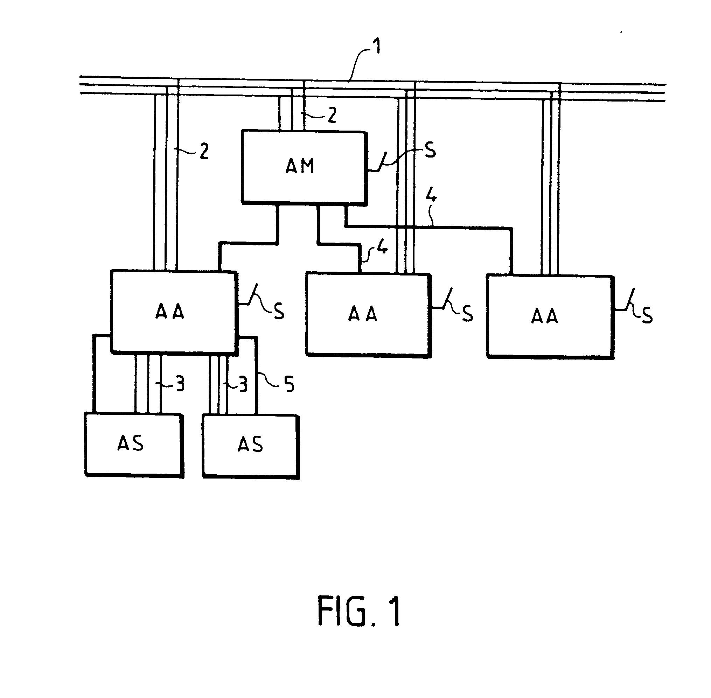

La figure 1 représente schématiquement les liaisons entre les armoires de commande constituant une tête de filerie selon l'invention. Celle-ci est destinée à commander un ensemble de machines appelé "module" dans la présente description et comprend essentiellement une armoire de module AM raccordée directement au réseau d'alimentation électrique 1 par des câbles d'alimentation 2. L'armoire de module regroupe les arrêts d'urgence du module et télécommande des armoires d'application AA, qui sont au nombre de trois dans l'exemple de la figure 1.

Une armoire d'application télécommande une application, les mots "module" et "application" ayant le sens défini plus haut. Cette télécommande peut se faire soit directement, soit par l'intermédiaire d'une ou plusieurs armoires secondaires AS, étant entendu qu'une armoire d'application peut éventuellement télécommander une autre armoire d'application.

Il est à noter, comme on le voit sur la figure 1, que chaque armoire d'application AA est raccordée directement au réseau d'alimentation 1 par des câbles d'alimentation tels que 2 et peut être mise en service isolément. Au contraire, les armoires secondaires AS ne sont pas raccordées au réseau 1 : leur alimentation provient d'une armoire d'application par l'intermédiaire de câbles d'alimentation 3. Une armoire secondaire est télécommandée par une armoire d'application et ne peut pas être mise en service isolément.

Sur la figure 1, on a désigné respectivement par 4 et 5 les câbles de liaison entre l'armoire de module et une armoire d'application d'une part, entre une armoire d'application et une armoire secondaire d'autre part.

Enfin, l'armoire de module et les armoires d'application sont équipées d'un sectionneur S alors que les armoires secondaires n'en ont pas.

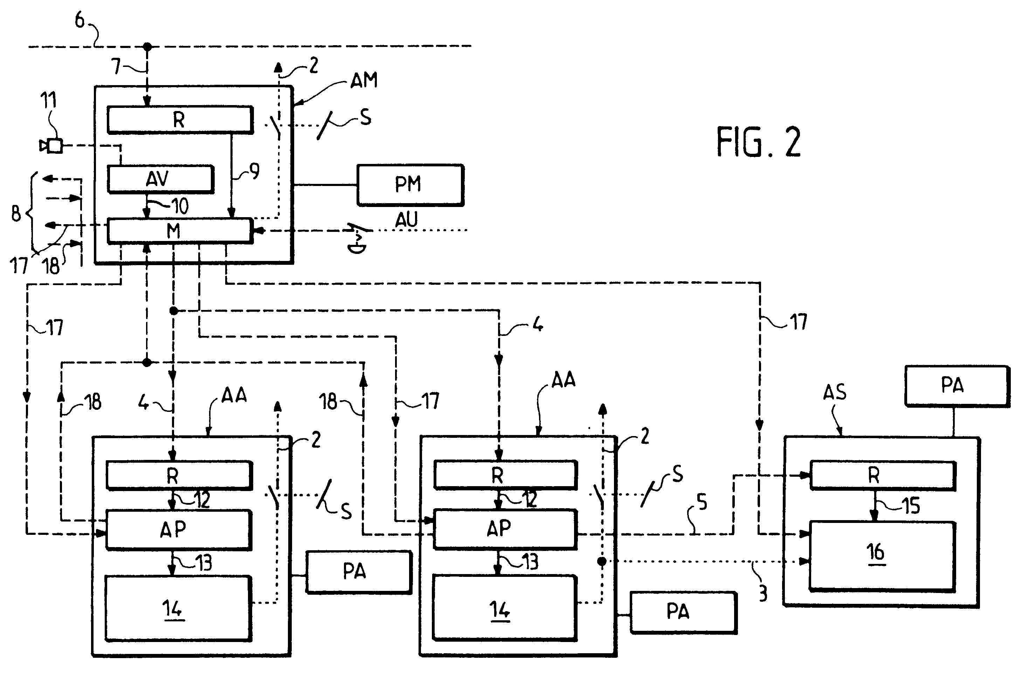

La figure 2 montre de manière plus détaillée la constitution des armoires et leurs liaisons. Dans la tête de filerie selon l'invention illustrée à la figure 2, il y a une armoire de module AM, deux armoires d'application AA et une armoire secondaire AS reliée à l'une des deux armoires d'application. L'armoire de module AM est reliée au réseau de télécommande 6 de l'atelier par un câble de liaison 7.

L'armoire de module AM comporte essentiellement une platine de réception R reliée à une platine de module M par une liaison 9 qui peut être une nappe de câbles préfabriquée. C'est la platine de réception R qui est raccordée au réseau de télécommande 6 par le câble 7. En effet, sa fonction est de recevoir sous forme impulsionnelle des ordres de télécommande émis soit par un réseau tel que 6, soit, comme on le verra plus loin, par une platine de module ou une platine d'application, et de distribuer des contacts libres de potentiel aux organes qu'elle commande. Une platine de réception peut recevoir plusieurs ordres différents (par exemple au nombre de 8), certains de ces ordres pouvant être reçus simultanément.

Quant à la platine de module M, elle traite l'une au moins des 3 fonctions suivantes :

    – commande de l'arrêt d'urgence AU propre au module ;

    – mise sous tension d'arrêts d'urgence extérieurs au module, comme cela est indiqué en 8 sur la figure 2 :

    – envoi de télécommandes d'ordres vers les platines de réception situées dans les armoires d'application.

Pour la commande de l'arrêt d'urgence propre au module, il est prévu des contacts à double coupure, libres de potentiel, pour l'envoi vers les applications de ce module.

La fonction de mise sous tension d'arrêts d'urgence extérieurs au module est nécessaire dans le cas de modules liés entre eux. Par exemple, si un atelier comporte une machine transfert et un appareil de manutention pour amener les pièces à une autre machine transfert, chacun de ces trois éléments sera considéré comme un module et il faut pouvoir les arrêter simultanément avec l'arrêt d'urgence d'un seul d'entre eux : il faut donc que chaque arrêt d'urgence soit sous tension, même si la machine ou le module correspondant ne l'est pas.

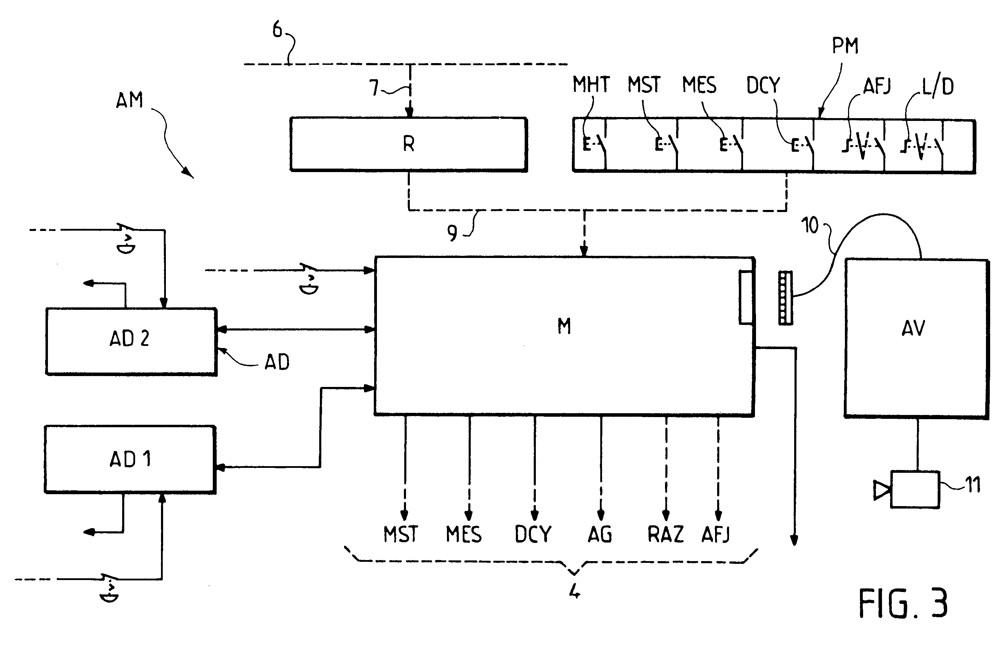

L'armoire de module est en outre reliée à un pupitre de commande appelé "pupitre de module" PM dans la présente description. Comme on le voit mieux sur la figure 3, celui-ci comprend un certain nombre de boutons poussoirs servant respectivement à la mise hors tension MHT, la mise sous tension MST, la mise en service MES, le départ de cycle DCY, ainsi qu'un commutateur "local/distance" LD. Toutes ces fonctions seront précisées ci-dessous lors de la description des armoires et d'application.

On voit encore sur les figures 2 et 3 que l'armoire de module AM est équipée d'une platine d'avertissement AV reliée à la platine de module M par une liaison 10, qui peut être une nappe de câbles préfabriquée. Le rôle d'une platine d'avertissement est de décaler dans le temps un ordre reçu, ce décalage étant utilisé pour la mise en route d'un signal d'avertissement optique ou sonore tel qu'un klaxon 11. De préférence, la platine d'avertissement est conçue pour traiter et décaler plusieurs ordres différents. Dans ce cas, elle est équipée de bornes aptes à recevoir des cavaliers permettant de mettre hors service certains avertissements si on le désire. Des contacts à fermeture libres de potentiel sont prévus pour la commande de l'avertisseur. Le rôle d'un tel avertissement est de prévenir le personnel de la mise en route imminente d'une machine par exemple et de lui laisser le temps de s'éloigner.

Dans l'exemple illustré à la figure 3, la platine de module M est encore associée à deux platines d'adjonction AD, référencées respectivement AD1 et AD2. Les platines d'adjonction sont utilisées pour l'extension des fonctions de sécurité si le nombre de contacts disponibles sur les platines existantes est insuffisant. Dans le cas de la figure 3, l'utilisation de platines telles que AD1 et AD2 permet de relier la platine M à un nombre relativement important d'arrêts d'urgence extérieurs au module.

On a enfin représenté symboliquement sur la figure 3 différents ordres que la platine M peut envoyer à une armoire d'application à travers la liaison 4, notamment : mise sous tension MST, mise en service MES, départ cycle DCY, arrêt général AG, remise à zéro RAZ, arrêt de fin de journée AFJ, etc...

La liaison 4 relie la platine de module M de l'armoire de module AM à une platine de réception R, située dans une armoire d'application AA (figure 2). Cette platine de réception est semblable à celle de l'armoire de module AM et ne sera pas décrite plus en détail ici.

Elle est reliée par une liaison 12, qui peut elle aussi être une nappe de câbles préfabriquée, à une platine d'application AP. Cette dernière traite notamment les fonctions suivantes : mise sous tension et hors tension, mise en service, départ et reprise de cycle, arrêt de fin de journée, réception et traitement de la télécommande d'arrêt d'urgence en provenance de la platine de module M et éventuellement l'envoi de télécommandes d'ordre vers une armoire secondaire ou une autre armoire d'application. Des contacts libres de potentiel sont disponibles pour chacune de ces fonctions.

La platine d'application AP est reliée par une liaison 13 à la commande d'application 14 également située dans l'armoire d'application AA.

La "mise sous tension" consiste à relier la machine au réseau d'alimentation électrique, mais celle-ci n'est pas encore prête à tourner. La "mise en service" correspond à la préparation des auxiliaires de la machine : elle est prête à tourner, mais ne produit pas encore. Le "départ de cycle" désigne le lancement de la production, la "reprise de cycle" étant la reprise de la production après une interruption. L'expression "remise à zéro" désigne, dans la présente description, la remise en état de certaines fonctions à mémoire.

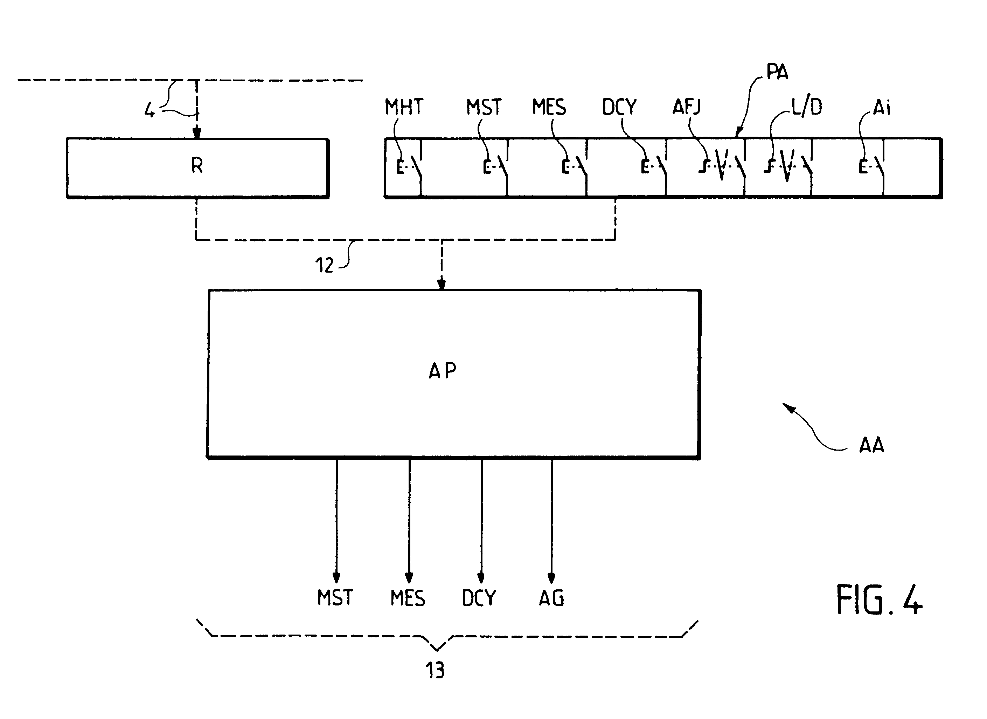

L'armoire d'application AP est commandée par un pupitre d'application PA représenté plus en détail sur la figure 4. Celui-ci comprend un certain nombre de boutons poussoirs pour la mise hors tension MHT, la mise sous tension MST, la mise en service MES, le départ de cycle DCY et l'arrêt immédiat AI ainsi qu'un commutateur d'arrêt de fin de journée AFJ et un commutateur "local/distance" L/D. La position "distance" de ce dernier signifie qu'on prend en compte les télécommandes alors qu'en position "local", on ne les prend pas en compte. Quant à l'expression "arrêt immédiat", elle désigne l'arrêt d'urgence propre à l'application considérée.

Les ordres de mise sous tension et hors tension, de mise en service, de départ et de reprise de cycle et d'arrêt de fin de journée proviennent soit du pupitre d'application PA si le commutateur L/D est en position "local", soit de la platine de réception R si le commutateur L/D est en position "distance".

La platine d'application AP peut être équipée de bornes aptes à recevoir des cavaliers permettant de réaliser plusieurs fonctions simultanément ou d'éliminer certaines fonctions, par exemple : mise sous tension et mise en service simultanées, mise en service et départ de cycle simultanés, suppression de l'étape "mise en service", etc...

Pour ce qui est de la commande d'arrêt d'urgence, la coupure des différents actionneurs peut être immédiate ou retardée (par exemple 5 secondes). Une coupure retardée est nécessaire dans les cas où une machine ne peut être arrêtée instantanément sans grave danger pour le personnel. C'est le cas notamment pour une meule telle que celles utilisées dans les machines de rectification : si on la bloquait instantanément, elle éclaterait violemment, risquant de blesser très gravement le personnel. Il faut donc la freiner pour que l'arrêt soit rapide, mais progressif.

On a encore représenté symboliquement sur la figure 4 les principaux ordres que la platine d'application peut transmettre : mise sous tension MST, mise en service MES. départ de cycle DCY, arrêt général AG, ces ordres étant transmis par la liaison 13 à la commande d'application 14 (figure 2).

Il est à noter que l'arrêt général correspond à une mise hors tension immédiate alors que l'arrêt d'urgence provoque l'arrêt le plus rapidement possible sans détérioration mécanique ou corporelle.

On voit encore sur la figure 2 une armoire secondaire AS reliée à une armoire d'application AA par un câble d'alimentation électrique 3 et un câble de liaison 5. Ce dernier relie la platine d'application AP d'une armoire d'application AA à une platine de réception R située dans l'armoire secondaire AS. Cette platine R est semblable aux autres platines de réception décrites ci-dessus et elle est reliée par une liaison 15 à la commande 16 des éléments qu'elle contrôle. L'armoire secondaire AS est commandée par un pupitre d'application PA semblable à ceux déjà décrits, à cette différence près qu'il n'a pas de commutateur local/distance. En effet, l'armoire secondaire étant toujours raccordée à une armoire d'application, elle prend nécessairement en compte les télécommandes, ce qui revient à être constamment en position "distance".

Le dispositif peut encore être complété par une platine dite "de zone protégée" ZP (non représentée aux dessins). Une "zone protégée" dans un atelier est une sone à accès réglementé, par exemple une zone où se trouve une machine dangereuse et qui est interdite au personnel lorsque la machine est en fonctionnement. De tels endroits sont fermés et protégés par un portillon d'accès appelé "protecteur". Ce dernier est associé à des systèmes de verrouillage agencés de sorte que la machine ne peut tourner que si le protecteur est fermé.

La platine de zone protégée ZP exerce deux fonctions. D'une part, elle met en sécurité les organes se trouvant dans une zone dangereuse en agissant sur le portillon d'accès à cette zone. Pour cela, on a prévu des contacts à fermeture (double coupure). D'autre part, elle assure le réarmement après la fermeture du protecteur. Une platine de zone protégée est toujours associée à une armoire d'application car une zone protégée correspond toujours à une application.

On a encore représenté sur la figure 2 des liaisons d'arrêt d'urgence 17 entre l'armoire de module AM et chacune des autres armoires (armoires d'application et armoire secondaire). Ces liaisons sont différentes des liaisons 4 car un arrêt d'urgence est un ordre permanent et non pas impulsionnel. De plus, l'armoire de module doit pouvoir commander directement tous les arrêts d'urgence du module : c'est pourquoi il y a des liaisons 17 entre l'armoire AM et toutes les autres armoires du module.

On voit également sur la figure 2 des liaisons 18 de mise sous tension d'arrêt d'urgence reliant chaque armoire d'application à l'armoire de module : ces liaisons 18 servent à mettre sous tension l'arrêt d'urgence du module à partir d'une armoire d'application.

Des liaisons telles que 17 et 18 peuvent également exister entre le module considéré et un autre module, comme cela apparaît en 8 sur la figure 2.

Ainsi, la tête de filerie objet de l'invention présente des avantages particulièrement intéressants puisque la réalisation sous forme modulaire à l'aide de platines standards permet de gagner du temps pour la réalisation des armoires ou ensembles de commande. En effet, il est beaucoup plus rapide de se procurer les platines dont on a besoin et de les relier entre elles que de réaliser tous les câblages à partir de composants électromécaniques élémentaires.

De plus, il n'y a qu'un nombre limité de types de platines et le prix de revient de telles platines fabriquées en série est moins élevé que que le prix de revient de câblages effectués au coup par coup à partir de composants élémentaires.

Enfin, les platines peuvent être de petites dimensions, notamment grâce à l'emploi de composants miniaturisés, et un ensemble de platines reliées entre elles est moins encombrant qu'un système à base de composants élémentaires, ce qui permet un gain de place dans les armoires. A titre d'exemple, le volume de telles platines peut s'inscrire dans un parallélépipède rectangle de 115 mm de longueur et 85 mm de largeur, leur hauteur étant fonction du nombre de composants et de bornes implantés.

Elles peuvent être aménagées pour être installées facilement sur les profilés standards disponibles dans le commerce. De préférence, elles sont réalisées à l'aide de circuits imprimés, les relais utilisés étant des relais de sécurité. Le raccordement peut se faire par bornes débrochables au pas de 5 mm par exemple. Les différents câblages à l'intérieur des platines n'ont pas été décrits car ils sont connus de l'homme du métier et la même fonction peut être réalisée avec des câblage différents.

Enfin, il est bien entendu que l'invention ne se limite pas au seul mode de réalisation qui vient d'être décrit, mais qu'elle en couvre au contraire toutes les variantes. C'est ainsi que l'homme du métier pourra adapter les liaisons et les câblages en fonction de chaque cas particulier, ou éliminer certaines fonctions jugées inutiles par l'utilisation de cavaliers comme indiqué plus haut. De plus, certains éléments ne sont pas toujours indispensables. Par exemple, une armoire de module peut ne pas comporter de platine de réception si elle n'est pas reliée à un système de télécommande et commandée uniquement par un pupitre de module. De même, une armoire d'application n'est pas nécessairement reliée à une armoire de module et ne commande pas toujours une armoire secondaire. Dans certains cas, une armoire secondaire peut résulter de l'"éclatement" d'une armoire d'application rendu nécessaire pour des questions d'encombrement par exemple.

**Revendications**

1 - Tête de filerie, notamment pour la commande de machines et/ou installations industrielles, réalisée de façon modulaire à l'aide de platines standards composées chacune d'un ensemble de composants électromécaniques élémentaires, caractérisée en ce que les platines sont regroupées en des ensembles servant à la commande soit d'un ensemble de machines ou module, soit d'une machine ou application, soit d'un sous-ensemble d'une application.

2 - Platine utilisable dans la tête de filerie selon la revendication 1, dite platine de module (M), caractérisée en ce qu'elle remplit l'une au moins des fonctions suivantes:

– commande de l'arrêt d'urgence d'un module donné;
– mise sous tension d'arrêts d'urgence extérieurs à ce module;
– envoi de télécommandes d'ordre vers au moins une platine réceptrice (R) appartenant à un ensemble servant à la commande d'une application de ce module.

3 - Platine utilisable dans la tête de filerie selon la revendication 1, dite platine d'application (AP), caractérisée en ce qu'elle remplit l'une au moins des fonctions suivantes: mise sous tension et hors tension d'une application, mise en service, départ et reprise de cycle d'une application, arrêt de fin de journée, réception et traitement d'un arrêt d'urgence en provenance d'une platine de module (M) selon la revendication 2 et envoi de télécommandes d'ordre vers un ensemble servant à la commande d'un sous-ensemble d'une application ou vers une autre platine d'application (AP).

4 - Platine utilisable dans la tête de filerie selon la revendication 1, dite platine d'avertissement (AV), caractérisée en ce qu'elle a pour fonction de décaler dans le temps un ordre reçu, ce décalage étant utilisé pour déclencher un signal d'avertissement.

5 - Platine utilisable dans la tête de filerie selon la revendication 1, dite platine de réception (R), caractérisée en ce qu'elle a pour fonction de recevoir les ordres émis par un dispositif de télécommande (6) et de les transmettre à des organes qu'elle commande, soit directement, soit par l'intermédiaire d'une platine de module (M) ou d'une platine d'application (AP).

6 - Platine utilisable dans la tête de filerie selon la revendication 1, dite platine de zone protégée (ZP), caractérisée en ce qu'elle remplit l'une au moins des fonctions suivantes:

– mise en sécurité d'organes se trouvant dans une zone dangereuse, par exemple par action sur un portillon d'accès à cette zone; et
– réarmement à la fermeture du protecteur.

7 - Platine utilisable dans la tête de filerie selon la revendication 1, dite platine d'adjonction (AD), caractérisée en ce qu'elle sert à doubler les fonctions de sécurité d'une platine de module (M) selon la revendication 2 ou d'une platine de zone protégée (ZP) selon la revendication 6.

8 - Platine selon l'une quelconque des revendication 2 à 7, caractérisée en ce qu'elle est équipée de bornes aptes à recevoir au moins un cavalier afin d'éliminer certaines fonctions ou de réaliser plusieurs fonctions simultanément.

9 - Tête de filerie selon la revendication 1, caractérisée en ce que l'ensemble servant à la commande d'un module comprend une platine de module (M) selon la revendication 2 et éventuellement une platine de réception (R) selon la revendication 5.

10 - Tête de filerie selon la revendication 1, caractérisée en ce que l'ensemble servant à la commande d'une application comprend une platine de réception (R) selon la revendication 5 et une platine d'application (AP) selon la revendication 3.

11 - Tête de filerie selon la revendication 1, caractérisée en ce que l'ensemble servant à la commande d'un sous-ensemble d'une application comprend une platine de réception (R) selon la revendication 5.

12 - Tête de filerie selon l'une quelconque des revendications 9 à 11, caractérisée en ce que l'ensemble servant à la commande d'un module est raccordé à un réseau d'alimentation électrique (1) et à un réseau de télécommande (6), en ce que l'ensemble servant à la commande d'une application est relié d'une part au réseau d'alimentation électrique (1) par un câble (2) et d'autre part à un ensemble servant à la commande d'un module par un câble de liaison (4) et en ce que l'ensemble servant à la commande d'un sous-ensemble d'une application est relié à l'ensemble servant à la commande de cette application d'une part par un câble d'alimentation électrique (3) et d'autre part par un câble de liaison (5).

FIG. 1

FIG. 2

EP 0 453 346 A1

FIG. 3

FIG. 4

**Office européen
des brevets**

**RAPPORT DE RECHERCHE EUROPEENNE**

Numero de la demande

EP    91 40 0914

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1338415 (PUECHBERTY)<br>* le document en entier * | 1 | H02B1/24 |
| A | US-A-4402721 (ERICSON ET AL)<br>* colonne 4, ligne 14 - colonne 6, ligne 54; figure 1 * | 1 | |
| A | US-A-3760169 (PACULAT)<br>* colonne 1, lignes 30 - 57; figure 1 * | 1 | |

**DOMAINES TECHNIQUES RECHERCHES (Int. Cl.5)**

H02B
G05B

Le présent rapport a été établi pour toutes les revendications

| Lieu de la recherche | Date d'achèvement de la recherche | Examinateur |
|---|---|---|
| LA HAYE | 05 JUILLET 1991 | WOODALL C.G. |